# EUROPEAN PATENT APPLICATION

(11) **EP 4 826 943 A1**
(43) Date of publication of application: **21.10.2026**
(21) Application number: 25170564.6
(22) Date of filing: 15.04.2025
(51) Int. Cl.: H02J 3/18

(54) **ARRANGEMENT AND METHOD FOR CONTROLLING POWER FLOW IN AN ELECTRICAL GRID**

(71) Applicant: Siemens Energy Global GmbH & Co. KG, 81739 München (DE)
(72) Inventor: Panosyan, Ara, 91074 Herzogenaurach (DE); Silva Filho, Jose Jackson Antunes, 91058 Erlangen (DE); Grandidier, Sylvain, 91080 Uttenreuth (DE); Marin Arevalo, Leonardo Vidal, 91097 Oberreichenbach (DE); Pieschel, Martin, 90518 Altdorf (DE); Kuhn, German, 91052 Erlangen (DE)

(57) **Abstract**

The invention relates to an arrangement (1) for controlling a power flow in an electrical transmission grid (2). The arrangement comprises a first commutation branch (31), a second commutation branch (32), wherein a commutation switch (PE) is arranged in either the first or the second commutation branch (31, 32), a first impedance module (41), comprising a first impedance element (C1) arranged between terminals (411, 412) of the first impedance module (41), a first parallel switch (S1) arranged in a branch parallel to the first impedance element (C1), a first branch connection switch (A1) to connect the first impedance module (41) to the first commutation branch (31), a second branch connection switch (B1) to connect the first impedance module (41) to the second commutation branch (32), a second impedance module (42), comprising a second impedance element (C2) arranged between terminals (421, 422) of the second impedance module (42), a second parallel switch (S2) arranged in a branch parallel to the second impedance element (42), a third branch connection switch (A2) to connect the second impedance module (42) to the first commutation branch (31), and a fourth branch connection switch (B2) to connect the second impedance module (42) to the second commutation branch (32). The invention further relates to a method for controlling power flow by means of the arrangement.

## Description

The present invention relates to an arrangement for controlling a power flow and/or impedance in an electrical transmission grid.

Transmission system operators usually aim at increasing as well as controlling the power flow over the transmission lines of the electrical transmission grid without the need to build additional transmission lines, which is very costly and can take years to realize due to regulatory challenges.

A traditional approach to increase the capacity of existing transmission lines is the use of fixed series capacitors (FSC). Depending on the conditions in the transmission system, the power flow through certain lines can be noticeably below the thermal capacity of the line. Such power flow is mainly limited by the voltage angle difference between the two ends of the line and the impedance of the line, which is mainly inductive. Capacitors are therefore arranged in series in transmission lines to compensate for the line inductance and therefore increase the current or power flow over the line up to its thermal limit.

Known FSCs have, however, some disadvantages, such as the inadequacy to provide a control action, as well as the risk of Sub-Synchronous Resonance (SSR) for power plants close to the line. Another disadvantage of this solution is its low flexibility in the event of changing requirements of the transmission grid.

A flexible alternative to an FSC are series connected FACTS devices, such as a thyristor-controlled series capacitor (TCSC), a static synchronous series compensator (SSSC) and a unified power flow controller (UPFC). These devices have fast control capabilities and offer a continuous control of the impedance and power flow over a line. The disadvantage of such devices is however their much higher cost, and complexity, as the power electronic converters and switches are connected in series to the line and must carry the full load. In addition, special and expensive electronic bypass switches are required to protect such power electronic equipment during short circuit faults on the transmission line.

The WO 2022/167071 A1 describes three variants of the FSC. According to the first variant, a fixed capacitor is inserted into an AC phase line. According to the second variant, called TSCS, antiparallel thyristors are arranged parallel to the capacitor, that can influence the current flow through the capacitor. According to the third variant, a switching module with power semiconductors is additionally arranged in series with the capacitor.

The object of the invention is thus to propose an afore mentioned arrangement that is as reliable and as cost-effective as possible.

The object is achieved by a converter according to claim 1.

According to the invention, the arrangement for controlling a power flow in an electrical transmission grid comprises a first commutation branch, and a second commutation branch, wherein a commutation switch is arranged in either the first or the second commutation branch. The arrangement further comprises a first impedance module, comprising a first and a second terminal to connect the first impedance module in series with a phase line of the grid, a first impedance element arranged between (and electrically connected to) the terminals of the first impedance module, a first parallel switch arranged in a branch parallel to the first impedance element, a first branch connection switch to connect the first impedance module to the first commutation branch, a second branch connection switch to connect the first impedance module to the second commutation branch, a second impedance module, comprising a first and a second terminal to connect the second impedance module in series with a phase line of the grid, a second impedance element arranged between (and electrically connected to) the terminals of the second impedance module, a second parallel switch arranged in a branch parallel to the second impedance element, a third branch connection switch to connect the second impedance module to the first commutation branch, and a fourth branch connection switch to connect the second impedance module to the second commutation branch.

The dimensioning of the impedances (capacitive element, inductive element or both) in Ohm in the different sections can be done according to a geometric series. This enables the capability to cover a range of impedances between 0 Ohm and the sum of all impedances (capacitive or inductive) in discrete manner using a particular switching combination of the impedances with a step width corresponding to the smallest impedance value present among the impedance elements.

In some applications it might be advantageous to use more than one commutation switch. According to an example, the commutation switch is a first commutation switch that is arranged in the first commutation branch, and the arrangement further comprises a second commutation switch that is arranged in the second commutation branch.

The arrangement is modular, it has at least two impedance modules (their number, however, can be chosen to match the requirements of the respective application) arranged and connected to each other in series in a phase line of the transmission grid. In addition, the impedance modules can each be connected to two commutation branches. Therefore, instead of using the parallel switches to switch each of the impedance elements in and out of the operating current path as a way of controlling the level of power compensation, the current can be first commutated to the commutation branches and controlled by the commutation switch.

The role of the commutation switch(es) is to commutate the current from one path to another during the switching/control action. This enables switching at current zero crossing and avoids any arcing during this transition. In normal operation (usually most of the time) the commutation switches do not conduct any current and therefore do not need to be designed to carry the maximum load current continuously, since they need to be loaded for only a small fraction of a second (50-20ms). They also require no special bypass switches, as the likelihood of having a short circuit fault on the line exactly at the time of a switching action is almost zero, and even if such an extremely rare case would happen, the commutation switches may be allowed to fail without causing any interruption on the line, because they don't have to carry the load current during normal operation. A failure of a commutation switch will therefore only cause the arrangement to remain at a certain compensation level and not being able to switch to other positions. This is not a major challenge, as the power flow over the line can stay unchanged until the commutation switches are replaced.

The arrangement according to the invention is both fast (e.g., < 1 second) and simple, avoiding the need for a full power electronic converter or a complex fully power electronic-based switches, which typically requires bypassing during transient faults. Under normal operating conditions, only the parallel switches conduct the load, while the commutation switches remain inactive. This eliminates the need for special fast protection of the power electronics, such as expensive bypass switches for fault conditions. Additionally, the parallel switches can be designed simpler than circuit breakers because they do not need to make or break any current, as they are switched at zero current. This is achieved by using the commutation switches to commutate between different positions (i.e., capacitor or reactor steps). The arrangement of the present invention can thus be less complex and more cost-effective than full converter or power electronic switch-based solutions. Furthermore, it will offer higher reliability and availability, as the system is more robust and less sensitive to short circuit faults on the line. Even if a switch fails, the transmission line will remain operable, with only the power flow control action being temporarily interrupted.

Preferably, each of the first and second impedance elements is a capacitor or a reactor (each of the impedance elements are capacitors or reactors). For example, the first and the second impedance elements can both be capacitors, or, alternatively, the first impedance element can for example be a capacitor, whereas the second impedance element can be a reactor. The arrangement can in general comprise any number of impedance modules, wherein the number of impedance elements that are capacitors and the number of impedance elements that are reactors can be chosen to fulfill the requirements of the respective application. In this context, reactors, also known as inductors, are understood as components that provide inductive reactance to the electrical circuit, whereas capacitors are components that provide capacitive reactance to the electrical circuit.

According to an embodiment of the invention the first and the second parallel switch are mechanical switches. Since the parallel switches carry the operating current, the use of mechanical switches can significantly decrease the power loss. The mechanical switches preferably are fast acting switches which can open or close within approx. 100ms. Such switches are usually available in circuit breakers (CB) which can open/close within approx. 60ms. Circuit breakers are, however, also designed to be able to break high current, which is why circuit breakers are usually costly. The mechanical switches needed for the present solution would however not need to make or break any currents, since the current commutation happens through the power electronic switches. Such mechanical switches are therefore expected to be significantly simpler and cheaper than circuit breakers.

Suitably, the commutation switch is a power electronic switch. If more than one commutation switch is used, any of them or all commutation switches can be power electronic switches. Power electronic switches can provide fast and precise control over the current, allowing for rapid commutation between different impedance elements, which helps in maintaining stable grid operations. These switches are highly reliable and can operate effectively in various conditions without the need for continuous current carrying, reducing the likelihood of operation during faults. Additionally, power electronic switches can be designed to handle high voltages and currents, making them suitable for large-scale power systems. Power electronic switches can be controlled electronically, enabling easy integration with automated control systems and advanced protection mechanisms. This enhances the overall efficiency and flexibility of the arrangement, allowing for effective management of power flow and compensation levels.

The commutation switch or switches can comprise antiparallel thyristors. Furthermore, the commutation switch or switches can comprise an IGBT, IGTC and/or a GTO, or any other suitable semiconductor that can be switched off.

According to an embodiment of the invention an absolute value of the impedance of the first impedance element can lie between 0,1 Ohm and 10 Ohm, preferably between 0,5 Ohm and 8 Ohm. Depending on whether the respective impedance element is a capacitor or reactor, the above values correspond to the capacitive or inductive reactance. The above values are most effective in a power grid with rated currents between 1kA and 10kA and a rated voltage of 100kV to 800kV. Accordingly, the arrangement preferably is configured to operate at operating voltages of more than 1 kV, preferably more than 100 kV.

According to an embodiment, the arrangement comprises at least two, preferable five, most preferably at least 10 impedance modules connected to the same phase line of the transmission grid. The use of a plurality of impedance modules allows a fine stepwise control of the grid power.

Particularly in case of a multi-phase power grid it might be advantageous to arrange impedance modules in some, preferable in each of the phase lines of the grid. Accordingly, in case of a three-phase grid, the phase line is a first phase line and the arrangement comprises impedance modules connected to a second and/or third phase line of the grid. Suitably, each of the phase lines of the transmission grid may comprise dedicated impedance modules arranged therein to further enhance the power flow control in the grid.

According to another embodiment of the invention the arrangement further comprises a static synchronous series compensation arrangement connected in n series to the impedance elements to enable a stepless control of the impedance or the power flow over the entire range. A static synchronous series compensator (SSSC) is a power quality FACTS device that comprises a VSC connected in series to a transmission line via a transformer or via multilevel inverters. The SSSC generally works like the STATCOM, except that it is serially connected (via a series transformer) instead of being connected as a shunt. The output of the SSSC is a series injected voltage, which leads or lags the line current by 90 degrees, thus injecting a controllable inductive or capacitive reactance. The SSSC generally can be used to reduce or increase the impedance of the transmission line and increase the active power transfer capability of the line. The additional SSSC will enhance a continuous control of the series impedance or the power flow. The size of this SSSC can however be significantly lower than a full SSSC solution, because this small SSSC will only have to be sized to cover the in-between compensation steps between two discrete impedance steps and not for the full range. If the impedance elements are chosen based on a geometrical sequence, then the size of the static synchronous series compensator can for example be only half the size of the smallest impedance element to enable a stepless control of the impedance or the power flow over the entire controllable range.

The present invention further relates to a method for controlling a power flow in an electrical transmission grid (also denoted as power grid or transmission network).

The object of the invention is to provide such method that allows a reliable control of power flow.

The object is achieved by the method of claim 12.

In accordance with the method, an arrangement as described above is provided, wherein, to change an impedance in the grid at least one of the impedance elements is activated so that an operating current flows through the at least one impedance element, wherein to activate the at least one impedance element said operating current is commutated from the branch parallel to the first impedance element (commutated from the parallel switch of the at least one impedance module) to flow through the commutation switch before the parallel switch arranged in parallel to the at least one impedance element is controlled to open. In addition, to change an impedance in the grid at least one of the impedance elements can be disactivated so that an operating current does not flow through the at least one impedance element, wherein to deactivate the at least one impedance element said operating current is commutated from the first impedance element to flow through the commutation switch before the parallel switch arranged in parallel to the at least one impedance element is controlled to close.

The invention will be further explained based on the embodiments shown in figures 1 to 15.
Figure 1 schematically shows a first embodiment of an arrangement of the present invention;
Figures 2 to 14 schematically show a second embodiment of an arrangement of the present invention;
Figure 15 schematically shows a third embodiment of an arrangement of the present invention.

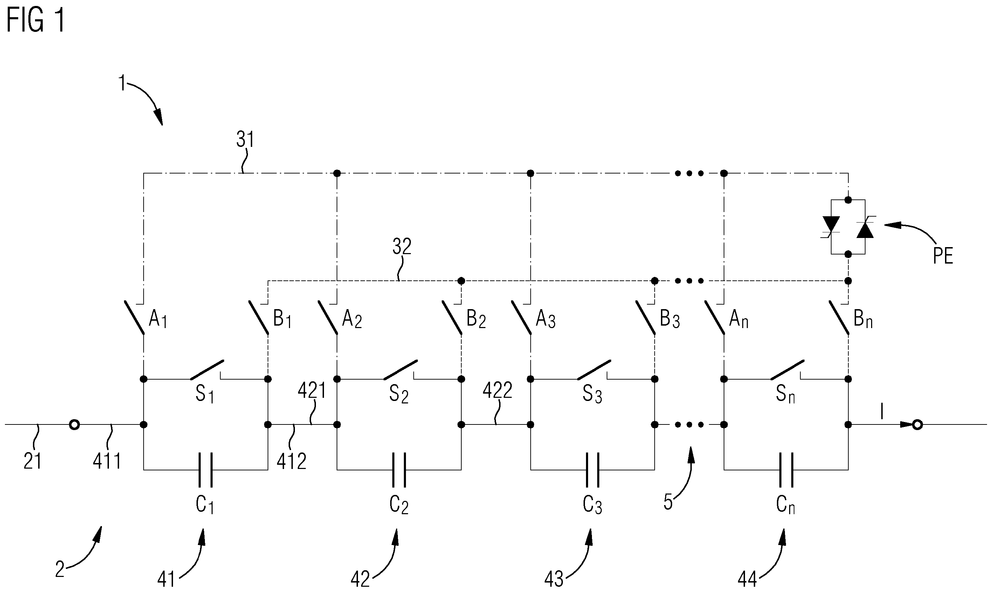

Figure 1 shows an arrangement 1 for controlling a power flow in an electrical transmission grid 2. The Arrangement 1 comprises a first commutation branch 31 and a second commutation branch 32, wherein a commutation switch PE is arranged in either the first or the second commutation branch 31, 32. In the embodiment of figure 1 the commutation switch comprises two antiparallel thyristors. The arrangement 1 further comprises a first impedance module 41, comprising a first and a second terminals 411, 412 to connect the first impedance module 41 in series with a phase line 21 of the grid, a first impedance element C1 arranged between the terminals 411, 412 of the first impedance module 41, a first parallel switch S1, that is a mechanical switch arranged in a branch parallel to the first impedance element C1, a first branch connection switch A1 to connect the first impedance module 41 to the first commutation branch 31, and a second branch connection switch B1 to connect the first impedance module 41 to the second commutation branch 32. The arrangement 1 also comprises a second impedance module 42 with a first and a second terminals 421, 422 to connect the second impedance module 42 in series with the phase line 21 of the grid 2, a second impedance element C2 arranged between the terminals of the second impedance module 42, a second parallel switch S2 arranged in a branch parallel to the second impedance element 42, a third branch connection switch A2 to connect the second impedance module 42 to the first commutation branch 31, and a fourth branch connection switch B2 to connect the second impedance module 43 to the second commutation branch 32.

According to the example displayed in figure 1, the arrangement 1 comprises a third impedance module 43 and a fourth impedance module 44, wherein the structure of the third and fourth impedance modules 43, 44 is similar to the structure of the first impedance module 41. The third and fourth impedance modules 43, 44 are connected to the commutation branches 31, 32 via respective branch connection switches A3, B3, A4, B4. The impedance elements C3, Cn of the third and fourth impedance modules 43, 44 can each be respectively bypassed by parallel switches S3 and S4. A current flowing through the arrangement 1 is denoted by I. Dotted lines 5 indicate that the arrangement 1 can comprise, if appropriate, further impedance modules.

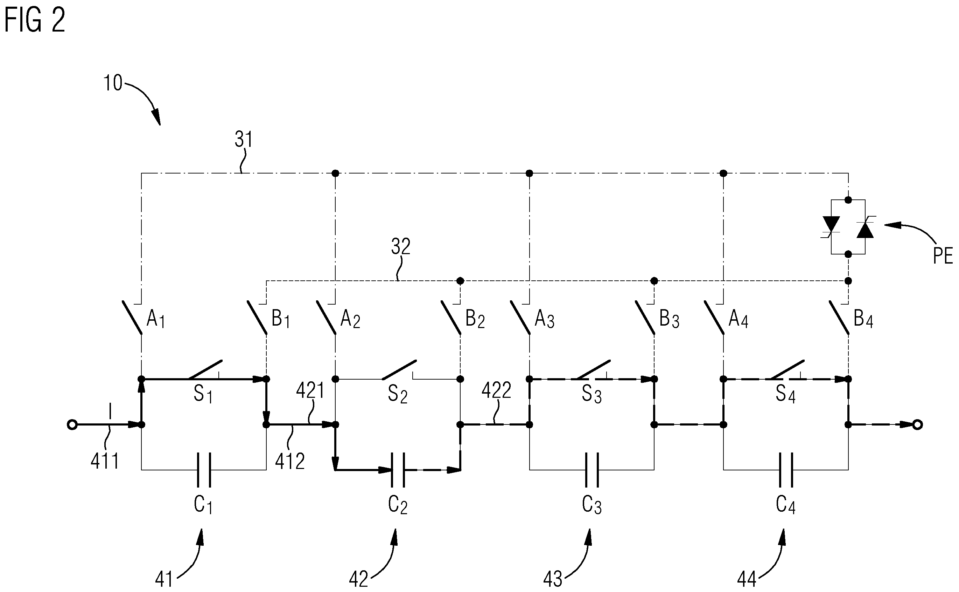

Figures 2 to 14 show an arrangement 10 that is basically similar to the arrangement 1 of figure 1. For reasons of clarity, identical and similar elements of the arrangements 1 and 10 are therefore provided with the same reference numerals. The process of switching from between two impedance states or values of the arrangement shall be explained below using the example of the figures 2 to 14.

The arrangement 10 is designed to operate in a transmission grid with a nominal voltage of 400kV and current of at least 1kA. The impedance value of the first impedance element C1 of the arrangement 10 is 0.5Ohm, the impedance value of the second impedance element C2 of the arrangement 10 is 1Ohm, the impedance value of the third impedance element C3 of the arrangement 10 is 2Ohm, the impedance value of the fourth impedance element C4 of the arrangement 10 is 4Ohm. The example shows the switching from an initial configuration with a total impedance 1Ohm to a final configuration with a total impedance of 2.5Ohm.

Figure 2 shows the initial operating state at time t0=0, wherein the operating current I flows through the second impedance element C2 and the parallel switches S1, S3 and S4 (the parallel switch S2 is open). Also, all branch connection switches A1-4, B1-4 are open, and the commutation switch PE is not active. As a first step, an arrangement control sends a command to open the branch connections switches A3 and B3 of the third impedance element 43. It needs to be mentioned that all time periods between the steps (t0-t9) are only examples and can be adjusted to match the requirements of a given application.

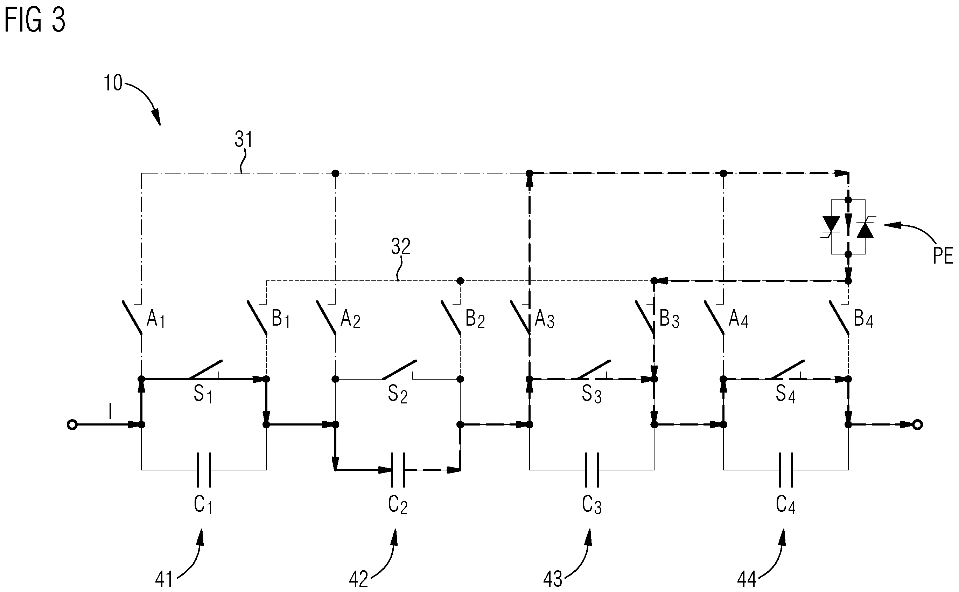

In a second step at time t1=0.075s as illustrated in figure 3 the branch connection switches A3 and B3 are closed. In addition, the commutation switch PE is controlled to activate, so that the current flows through the commutation switch PE and the third parallel switch S3. The third parallel switch S3 is controlled to open.

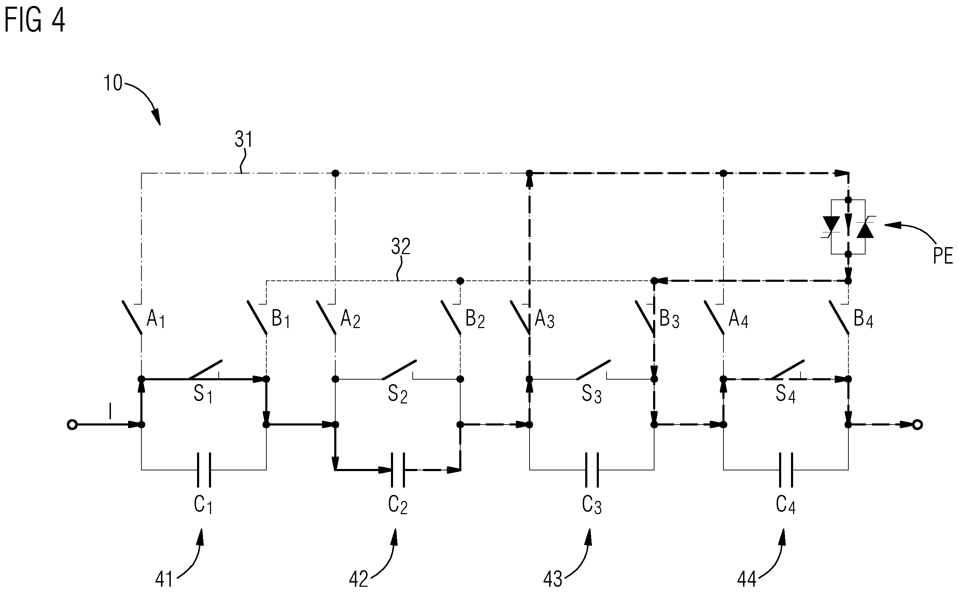

In a third step at time t2=0.150s as illustrated in figure 4 the third parallel switch S3 is open, so that the current flows only through the commutation switch PE.

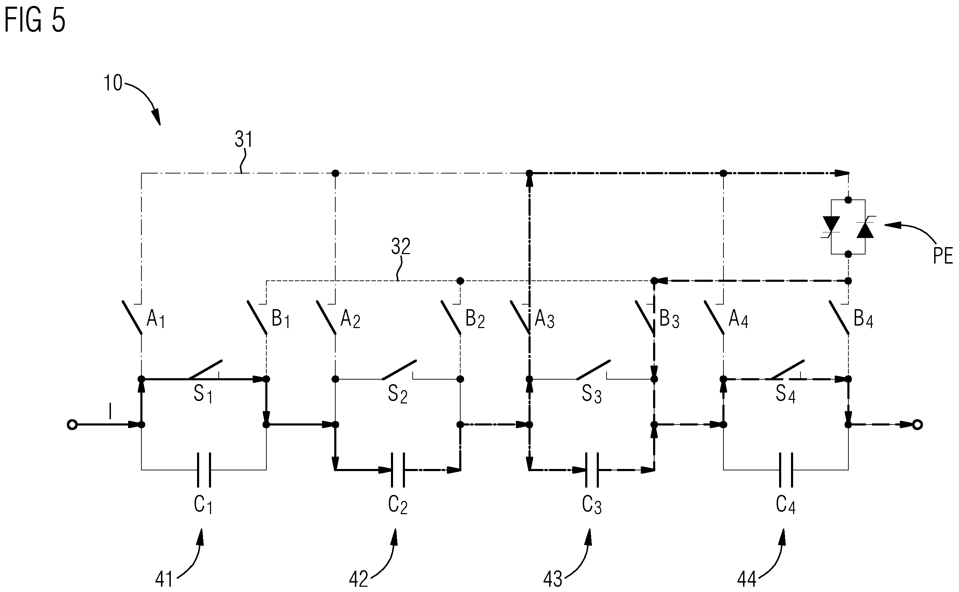

In a fourth step as illustrated in figure 5, the commutation switch PE is disactivated and the control sends a command to open the branch connection switches A3, B3 of the third impedance module 43. The current flows through the third impedance element C3.

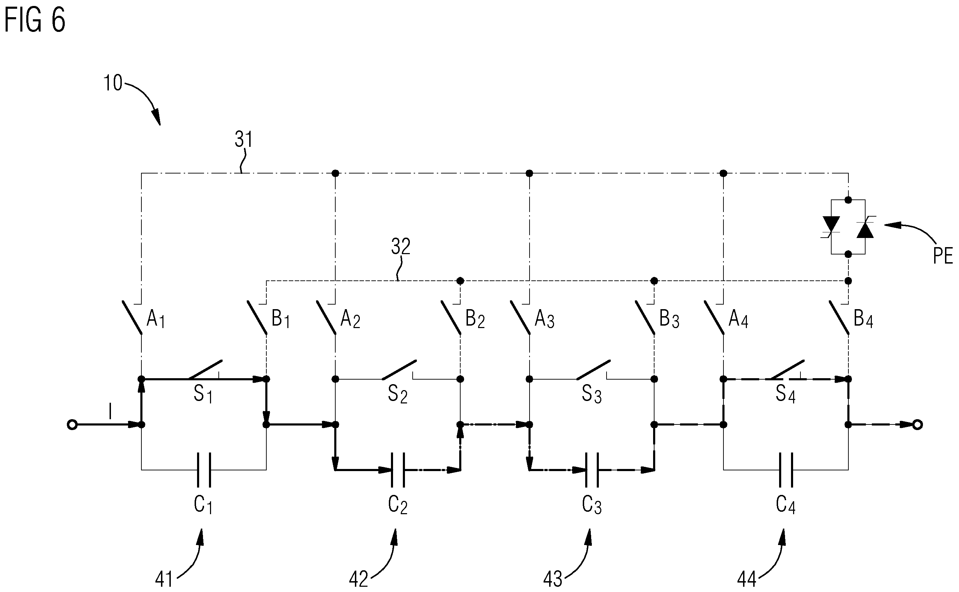

In a fifth step as illustrated in figure 6, at a time t3=0.225s, the control sends a command to open the branch connection switches A2 and B2 of the second impedance module 42. The branch connection switches A3, B3 of the third impedance module 43 are open.

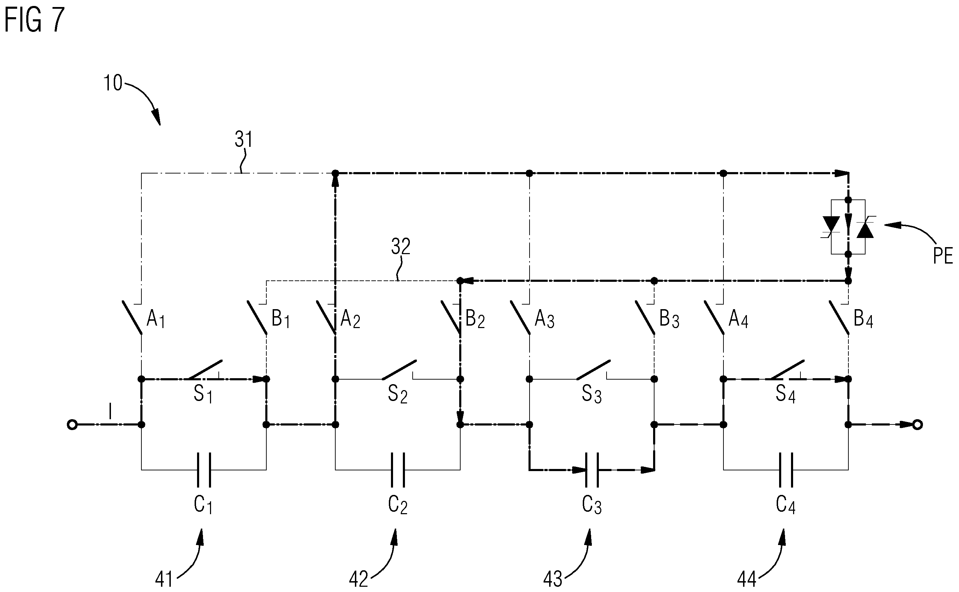

In a sixths step as illustrated in figure 7, at a time t4=0.300s, the branch connection switches A2 and B2 of the second impedance module 42 are closed. The commutation switch PE is activated by the control, so that the current flows through the commutation switch PE. The control sends a command to close the second parallel switch S2. Now, only the third impedance element C3 is in the current path.

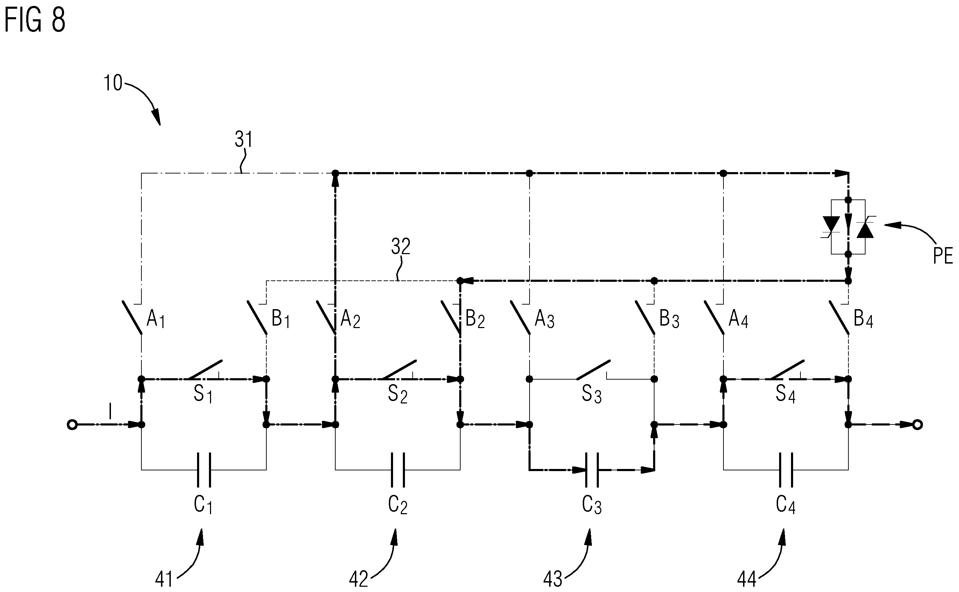

In a seventh step as illustrated in figure 8, at a time t5=0.375s, the second parallel switch S2 is closed, so that the current flows through the commutation switch PE and the second parallel switch S2.

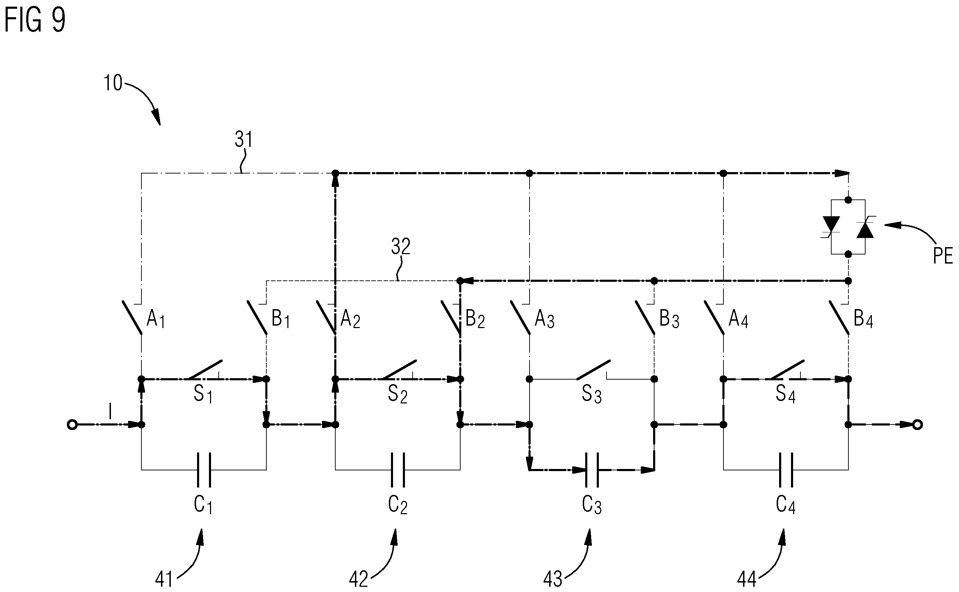

As illustrated in figure 9, the commutation switch PE is deactivated and the branch connection switches A2, B2 of the second impedance module 42 are controlled to open.

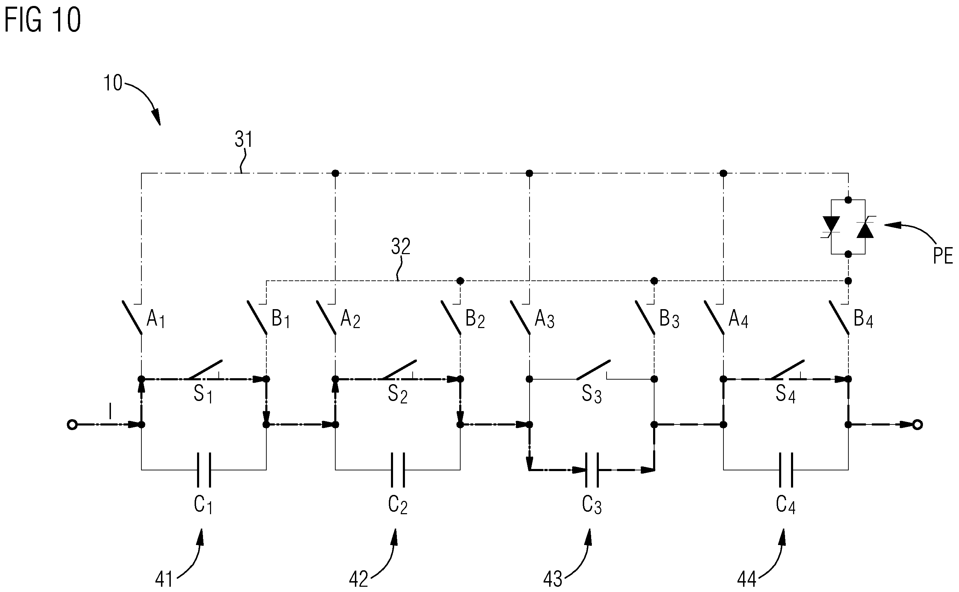

As depicted in figure 10, at a time t6=0.450s, the branch connection switches A2, B2 of the second impedance module 42 are open. The control controls the branch connection switches A1, B1 of the first impedance module 41 to close.

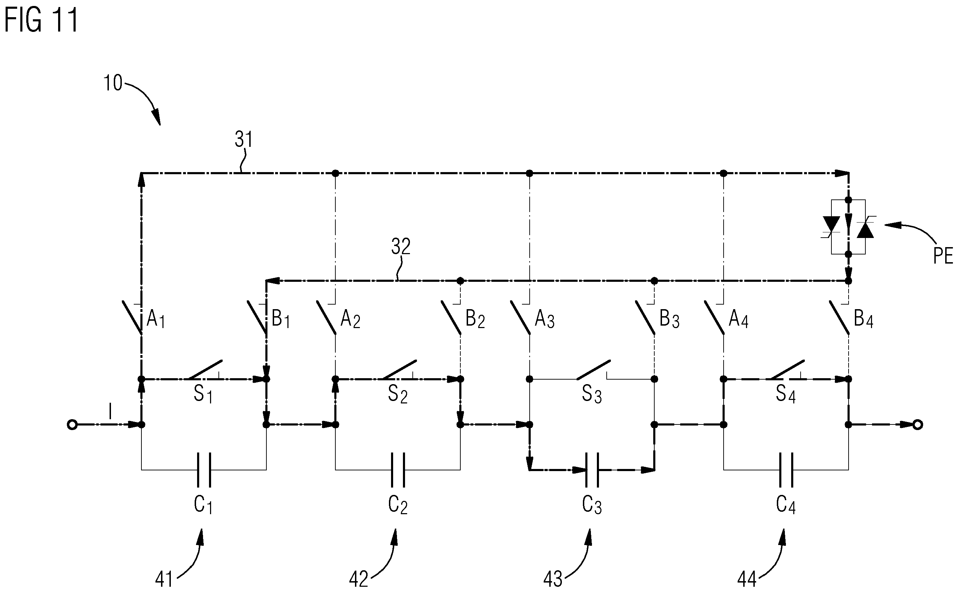

As depicted in figure 11, at a time t7=0.525s, the branch connection switches A2, B2 of the second impedance module 42 are closed. The commutation switch PE is activated by the control, so that the current flows through the commutation switch PE and the first parallel switch S1. The control commands the first parallel switch S1 to open.

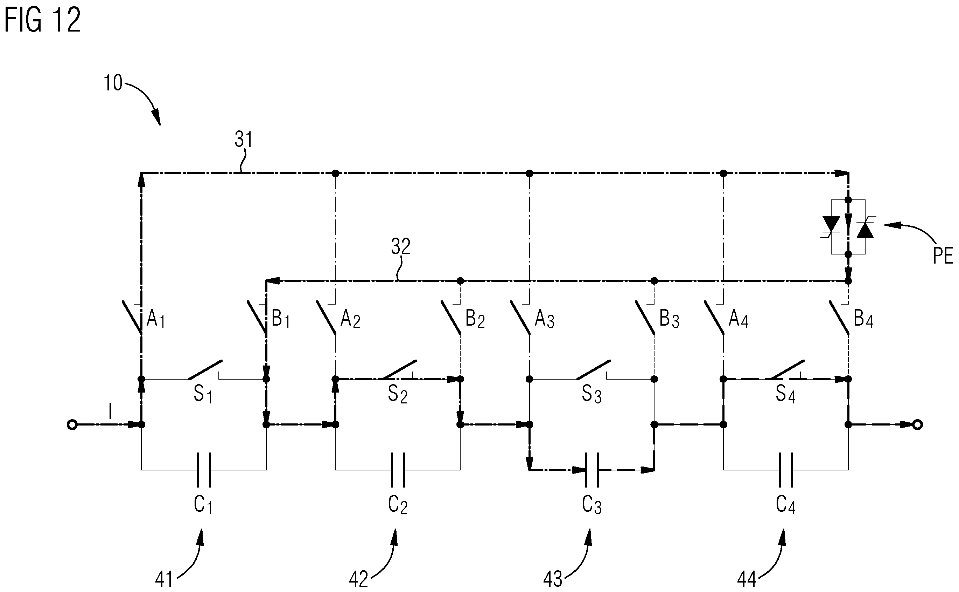

As shown in figure 12, at a time t8=0.600s, the first parallel switch S1 is open, so that the current flows through the commutation switch PE.

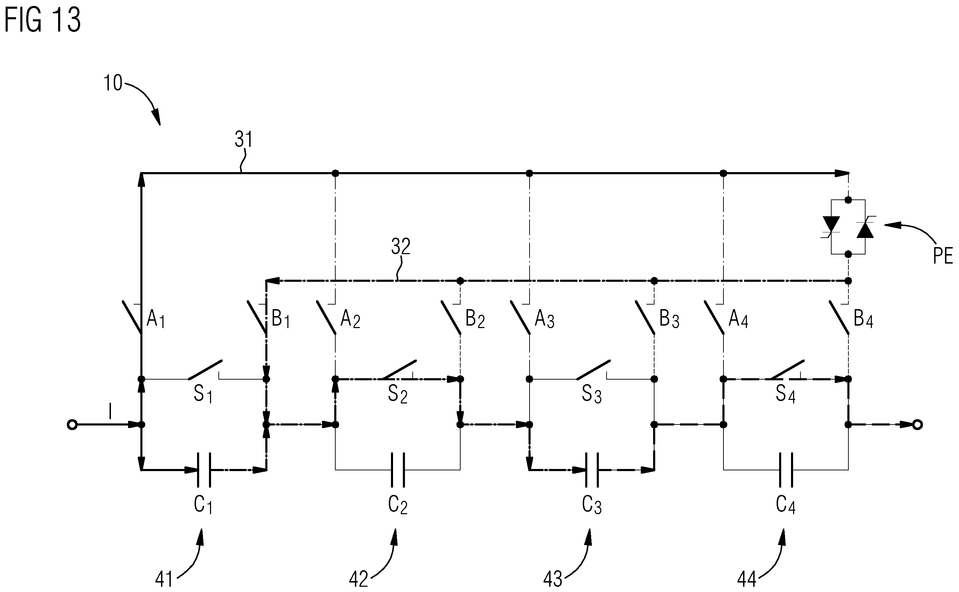

As shown in figure 13, the commutation switch PE is deactivated, so that the current flows through the first impedance element C1. A command is sent to the branch connection switches A1, B1 of the first impedance module 41 to open. The first and the third impedance elements are in the current path.

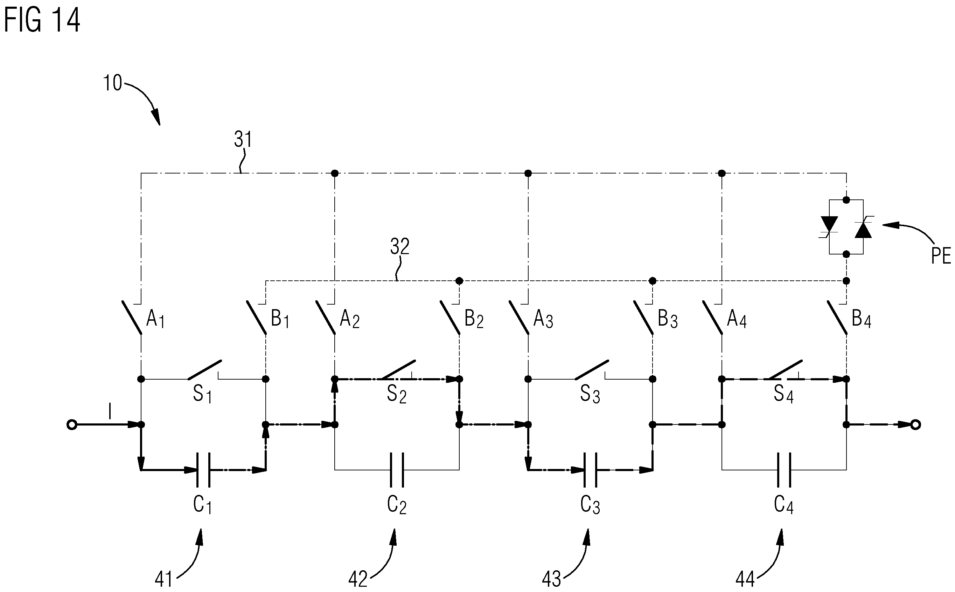

Figure 14 shows the final step of the operation at time t9=0.675, wherein the branch connection switches A1, B1 of the first impedance module 41 are open and the current flows through the first and the third impedance elements C1, C3 and the second and the fourth parallel switches S2, S4.

A similar procedure can be conducted if some of all of the capacitive impedance elements C1-4 are replaced by reactive impedance elements.

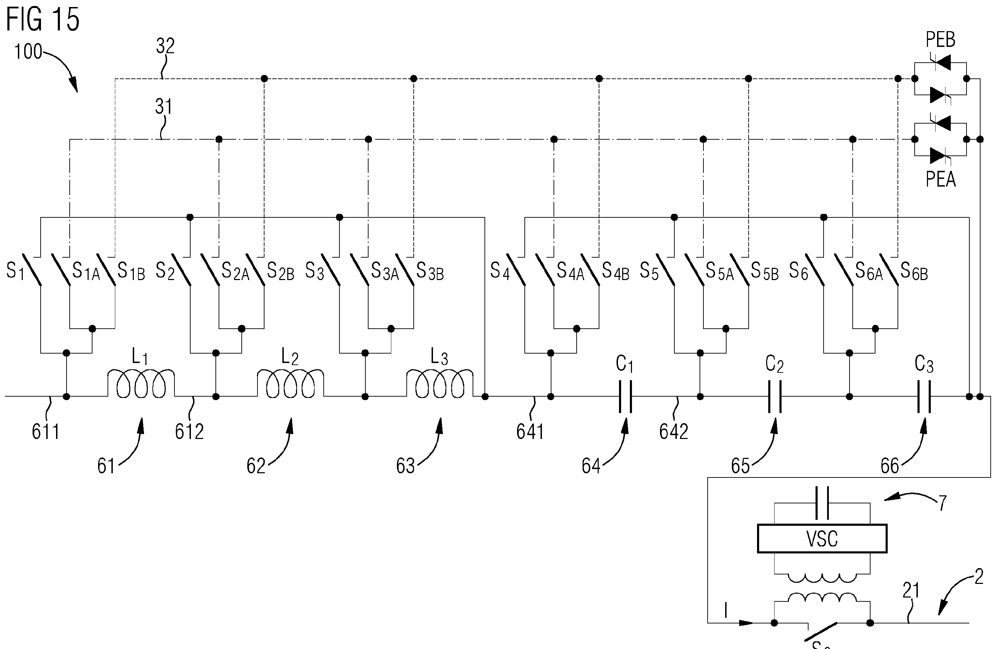

Figure 15 shows an arrangement 100 for controlling a power flow in an electrical transmission grid 2. For reasons of clarity, identical and similar elements of the arrangements 1 of figure 1 and arrangement 100 are provided with the same reference numerals.

The arrangement 100 comprises a first commutation branch 31 and a second commutation branch 32, wherein a first commutation switch PEA is arranged in the first commutation branch 31, and a second commutation switch PEB is arranged in the second commutation branch 32. The arrangement 100 further comprises a first impedance module 61 with a first and a second terminal 611, 612 to connect the first impedance module 61 in series with a phase line 21 of the grid 2, a first impedance element L1 arranged between the terminals of the first impedance module 61, a first parallel switch S1 arranged in a branch parallel to the first impedance element L1, a first branch connection switch S1A to connect the first impedance module 61 to the first commutation branch 31, and a second branch connection switch S1B to connect the first impedance module 61 to the second commutation branch 32. The first and the second commutation switches PEA, PEB have each antiparallel thyristors. The other switches are mechanical switches.

The arrangement 100 further comprises a second impedance module 64 with a first and a second terminal 641, 642 to connect the second impedance module 64 in series with a phase line 21 of the grid 2, a second impedance element C1 arranged between the terminals of the second impedance module 64, a second parallel switch S4 arranged in a branch parallel to the second impedance element C1, a third branch connection switch S4A to connect the second impedance module 64 to the first commutation branch 31, and a fourth branch connection switch S4B to connect the second impedance module 64 to the second commutation branch 32. The arrangement 100 also comprises four additional impedance modules 62, 63, 65, and 66, that are similarly designed as the first and, respectively, second impedance modules, having their respective impedance elements L2, L3, C2, C3, parallel switches S2, S3, S5, S6, and brand connection switches S2A, S2B, S3A, S3B, S5A, S5B, S6A, and S6B being mechanical switches.

In addition, the arrangement 100 further comprises a static synchronous series compensation arrangement 7 connected in parallel to the transmission line 21 of the grid 2. The SSSC can be bypassed by a bypass switch S0.

To change an impedance in the grid 2, at least one of the impedance elements L1-3, C1-3 is activated so that an operating current I flows through the at least one activated impedance element. In order to activate the impedance element the operating current I is commutated from the branch parallel to the to-be-activated impedance element to the commutation branches 31, 32 and to flow through the commutation switches PEA, PEB, before the parallel switch arranged in parallel to the to-be-activated impedance element is controlled to open.

## Claims

1. Arrangement (1) for controlling a power flow in an electrical transmission grid (2) comprising
- a first commutation branch (31),
- a second commutation branch (32), wherein a commutation switch (PE) is arranged in either the first or the second commutation branch (31, 32),
- a first impedance module (41), comprising
a first and a second terminal (411, 412) to connect the first impedance module (41) in series with a phase line (21) of the grid (2),
a first impedance element (C1) arranged between the terminals (411, 412) of the first impedance module (41),
a first parallel switch (S1) arranged in a branch parallel to the first impedance element (C1),
a first branch connection switch (A1) to connect the first impedance module (41) to the first commutation branch (31),
a second branch connection switch (B1) to connect the first impedance module (41) to the second commutation branch (32),
- a second impedance module (42), comprising
a first and a second terminal (421, 422) to connect the second impedance module (42) in series with a phase line (21) of the grid (2),
a second impedance element (C2) arranged between the terminals (421, 422) of the second impedance module (42),
a second parallel switch (S2) arranged in a branch parallel to the second impedance element (42),
a third branch connection switch (A2) to connect the second impedance module (42) to the first commutation branch (31), and
a fourth branch connection switch (B2) to connect the second impedance module (42) to the second commutation branch (32).

2. Arrangement (1) according to claim 1, wherein each of the first impedance element (C1) and the second impedance element (C2) is a capacitor or a reactor.

3. Arrangement (1) according to any of the preceding claims, wherein the first and the second parallel switch (S1, S2) are mechanical switches.

4. Arrangement (1) according to any of the preceding claims, wherein the commutation switch (PE) is a power electronic switch.

5. Arrangement (1) according to claim 4, wherein the commutation switch (PE) comprises antiparallel thyristors.

6. Arrangement (1) according to claim 4 or claim 5, wherein the commutation switch (PE) comprises an IGBT and/or a GTO.

7. Arrangement (1) according to any of the preceding claims, wherein an absolute value of the impedance of the first impedance element (C1) lies between 0,1 Ohm and 10 Ohm, preferably between 0,5 Ohm and 8 Ohm.

8. Arrangement (1) according to any of the preceding claims, wherein the arrangement (1) is configured to operate at operating voltages of more than 1 kV, preferably more than 100 kV.

9. Arrangement (1) according to any of the preceding claims, wherein the arrangement (1) comprises at least two impedance modules connected to the same phase line (21) of the transmission grid (2).

10. Arrangement (1) according to any of the preceding claims, wherein the phase line (21) is a first phase line and the arrangement (1) comprises impedance modules connected to a second and/or a third phase line of the transmission grid.

11. Arrangement (100) according to any of the preceding claims, wherein the arrangement (100) further comprises a static synchronous series compensation arrangement (7) connected in series to the transmission grid.

12. Method for controlling a power flow in an electrical transmission grid (2) using an arrangement (1) of any of the preceding claims, wherein, to change an impedance in the grid at least one of the impedance elements (41-44) is activated so that an operating current flows through the at least one impedance element, wherein to activate the at least one impedance element said operating current is commutated from the branch parallel to the first impedance element to flow through the commutation switch (PE) before the parallel switch (S1-4) arranged in parallel to the at least one impedance element is controlled to open.
